(19) Europäisches Patentamt
European Patent Office
Office européen des brevets

(11) Veröffentlichungsnummer: **0 025 942**
**A2**

(12) # EUROPÄISCHE PATENTANMELDUNG

(21) Anmeldenummer: **80105412.3**

(22) Anmeldetag: **10.09.80**

(51) Int. Cl.³: **C 07 F 1/02**
**C 08 F 4/48**

(30) Priorität: **25.09.79 DE 2938658**

(43) Veröffentlichungstag der Anmeldung:
**01.04.81 Patentblatt 81/13**

(84) Benannte Vertragsstaaten:
**AT BE CH DE FR GB IT LI LU NL SE**

(71) Anmelder: **BASF Aktiengesellschaft**
**Carl-Bosch-Strasse 38**
**D-6700 Ludwigshafen(DE)**

(72) Erfinder: **Hoecker, Hartwig, Dr.**
**Dr. Martin-Luther-Strasse 12**
**D-8580 Bayreuth(DE)**

(72) Erfinder: **Schulz, Guenther**
**Gartenstrasse 15**
**D-6531 Münster-Sarmsheim(DE)**

(54) **Lösungen bifunktioneller Organolithiumverbindungen in nichtpolaren organischen Kohlenwasserstoffen als Lösungsmittel, Verfahren zur Herstellung solcher Lösungen und deren Verwendung.**

(57) Die Erfindung betrifft Lösungen bifunktioneller Organolithiumverbindungen der Formel

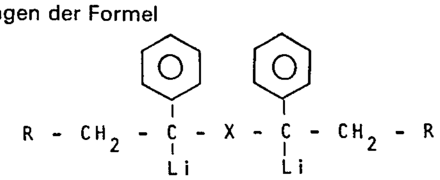

wobei X für Reste der Formel 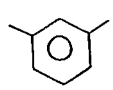

oder 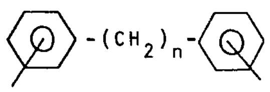

R für Alkyl steht, in wenigstens einem nichtpolaren organischen Kohlenwasserstoff als Lösungsmittel. Die beanspruchten bifunktionellen Organolithiumverbindungen sind ohne Zuhilfenahme von polaren Hilfsmitteln wie Äthern und dergleichen in ausreichenden Mengen löslich und stabil und sind in dieser Form zur Durchführung anionischer Polymerisationen, insbesondere zur Herstellung von Blockcopolymerisaten höherer Viskosität ohne Verwendung von Kupplungsmitteln geeignet. Die Herstellung der Lösungen erfolgt durch Addition von Alkyllithium an Bis-(1-phenylvinyl)-Verbindungen in dem vorgesehenen nichtpolaren organischen Lösungsmittel im Molverhältnis 2 : 1.

EP 0 025 942 A2

Lösungen bifunktioneller Organolithiumverbindungen in nichtpolaren organischen Kohlenwasserstoffen als Lösungsmittel, Verfahren zur Herstellung solcher Lösungen und deren Verwendung

Die vorliegende Erfindung betrifft Lösungen bifunktioneller Organolithiumverbindungen der Formel

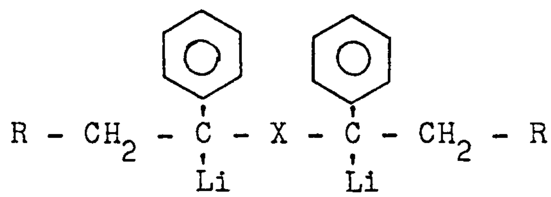

Die erfindungsgemäßen Verbindungen sind in nichtpolaren organischen Kohlenwasserstoffen ohne Zuhilfenahme von polaren Hilfsmitteln wie Äthern, Aminen und dgl. ausreichend löslich, was sie für die Verwendung zur Durchführung anionischer Polymerisation, insbesondere zur Herstellung von Blockcopolymerisaten auszeichnet. Eine weitere Ausgestaltung der Erfindung betrifft ein Verfahren zur Herstellung der erfindungsgemäßen Lösungen durch Umsetzung von Alkyllithiumverbindungen mit Bis-(1-phenylvinyl)-Verbindungen bestimmter Struktur.

Zum Stand der Technik nennen wir:

(1) DE-OS 27 26 980

(2) R.P. Foss et al, Macromolecules 10 (1977) 2, Seiten 287 bis 291

(3) G. Beinert et al, Makromol. Chem. 179, 551-555 (1978)

Aus (1) sind bi- und trifunktionelle Organolithiumstartersubstanzen und ihre Verwendung bei der anionischen Polymerisation bekannt. In (2) ist eine zusammenfassende Übersicht über die bisherigen Versuche, bifunktionelle anionische Starter herzustellen, gegeben (vgl. Seite 287, linke

Vo/BL

BAD ORIGINAL

und rechte Spalte sowie Seite 288, linke Spalte). Es sei insbesondere auf die Arbeiten von Fetters und Morton, sowie Karoly, die in dieser Literaturstelle angeführt sind, hingewiesen. Als einziger ätherfreier Initiator wird von Foss eine Additionsverbindung von sec.-Butyllithium und Divinylbenzol angeführt. Von dieser Verbindung ist bekannt, daß ihre Funktionalität größer als 2 ist und die unter Zuhilfenahme dieses Starters hergestellten Poly-Isoprene oft eine von der Vorhersage abweichende Struktur aufweisen. In der unter (2) genannten Arbeit wird ein Initiator beschrieben, der durch die Addition von sec.-Butyllithium an m-Diisopropenylbenzol hergestellt wird (vgl. Seite 288, linke Spalte, vorletzter Absatz).

Abgesehen davon, daß der in (2) beschriebene Dilithiumstarter in der unter (3) genannten Arbeit als eine Mischung einer Monolithiumverbindung mit überschüssigem sec.-Butyllithium beschrieben wird (vgl. die Ausführungen auf Seite 554, letzter Absatz und Seite 555), haben die sowohl in (1) als auch in (2) beschriebenen Initiatoren alle einen gravierenden Nachteil. Sie sind allesamt in nichtpolaren organischen Lösungsmitteln wenig löslich. Um sie besser löslich bzw. lösungsstabil zu machen, müssen polare Stoffe, wie Äther, Triäthylamin etc. zugesetzt werden, oder aber der Initiator muß durch Umsetzung mit geringen Mengen an Monomeren, meist Dienen, zu einem geringen Polymerisationsgrad (bezogen auf das Monomere kleiner als 10) umgesetzt werden, um eine bessere Löslichkeit und Beständigkeit zu erzielen. Diese, der eigentlichen Verwendung vorgelagerte, Polymerisation wird in der Literatur als "seeding"-Technik bezeichnet.

Es bestand daher die Aufgabe, bifunktionelle Organolithiumverbindungen zur Verfügung zu stellen, die diese Nachteile nicht mehr aufweisen.

Die Erfindung betrifft demgemäß Lösungen bifunktioneller Organolithiumverbindungen der Formel

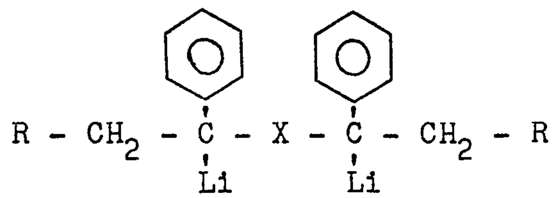

wobei X für Reste der Formel 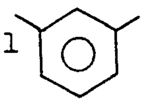 oder 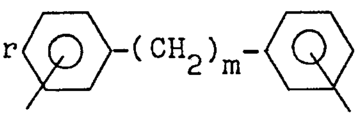

(n = 1 oder größer als 1) und R für Alkyl steht, in wenigstens einem nichtpolaren organischen Kohlenwasserstoff als Lösungsmittel.

Als nichtpolarer organischer Kohlenwasserstoff im Sinne der vorliegenden Erfindung als Lösungsmittel für die bifunktionellen Organolithiumverbindungen seien genannt: Toluol, Benzol, Xylol, Cyclohexan, n-Heptan, n-Hexan, um nur einige zu nennen. Besonders bevorzugt werden von den genannten Lösungsmitteln die aromatischen Kohlenwasserstofflösungsmittel wie Toluol und Benzol. In diesen lassen sich etwa 0,1 molare Lösungen der bifunktionellen Organolithiumverbindungen herstellen. Die Haltbarkeit solcher tiefrot gefärbter Lösungen beträgt bei $-20^{\circ}C$ mehrere Monate. Gegenüber den bisher bekannten bifunktionellen Organolithiumverbindungen ergeben sich folgende Vorteile:

1. Es ist nicht erforderlich, polare Zusätze, wie THF, Anisol, Amine und dgl. zur Erhöhung der Löslichkeit der erfindungsgemäßen bifunktionellen Organolithiumverbindungen zuzusetzen. Bei Verwendung dieser Lösungen für die anionische Polymerisation unter Verwendung von konjugierten Dienen bleibt somit der Anteil der 1.2-Strukturen im Dienblock bei ca. 10 %. Dieser geringe Anteil an 1.2-Struk-

turen im Dienblock bei Blockcopolymeren ist erwünscht, da diese Blockcopolymere bessere Eigenschaften aufweisen.

2. Die erfindungsgemäßen Lösungen erlauben auf die "seeding"-Technik zu verzichten; dadurch sind engere Molekulargewichtsverteilungen bei den Blockcopolymerisaten möglich, die infolge besserer Phasentrennung zu besseren Eigenschaften der Blockcopolymeren führen.

Insgesamt ist daher die Anwendung der erfindungsgemäßen Lösungen für die anionische Polymerisation einfacher, da weder die umständliche "seeding"-Technik noch die bei den monofunktionellen Startern erforderliche Kopplungsreaktion nötig ist. Bei Verwendung der erfindungsgemäßen Lösungen können bei der anionischen Polymerisation beide Monomersorten von Anfang an vorgegeben werden, d.h. man kann von Anfang an mit Mischungen der beiden reaktiven Monomeren, nämlich der konjugierten Diene und der vinylaromatischen Monomeren arbeiten. Die Vorteile von bifunktionellen Organolithiumverbindungen als Initiatoren für die anionische Polymerisation gegenüber den monofunktionellen Organolithiumverbindungen sind allgemein bekannt. Um z.B. lineare Blockcopolymerisate der Formel A-B-A (A = Homopolystyrolblock, B = Butadienblock) herzustellen, ist es bei monofunktionellen Startern erforderlich, die Monomeren in mehreren Schritten zuzugeben oder unter Zuhilfenahme eines Kopplungsmittels einen Zweiblock $A-B_{1/2}$ zu der Struktur A-B-A zu koppeln. Die Kopplungsreaktion verläuft meist nicht einheitlich und auch nicht vollständig, so daß oft recht komplizierte Produkte entstehen, die das Eigenschaftsbild oft in unerwünschter Weise verschlechtern.

Die Herstellung der erfindungsgemäßen Lösungen erfolgt durch Addition von Alkyl-Lithium an Bis-(1-phenylvinyl)-Verbindungen gemäß der Formel

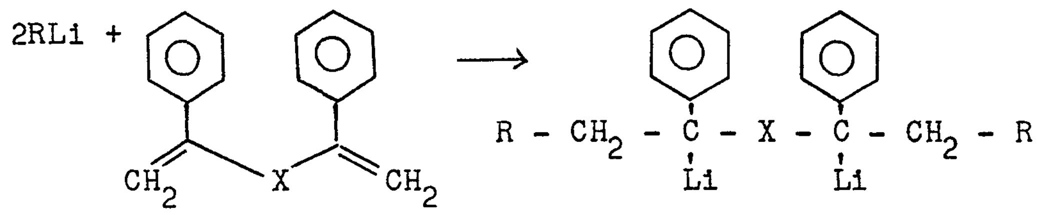

in einem nichtpolaren organischen Lösungsmittel, bevorzugt Benzol oder Toluol, im Molverhältnis 2 : 1.

Die Herstellung ist nachfolgend beispielhaft für die Umsetzung von sec.-Butyllithium als Vertreter der Alkyllithiumverbindungen und an m-Bis-(1-phenylvinyl)-benzol als Bis-(1-phenylvinyl)-Verbindung beispielhaft beschrieben (vgl. Beispiel 1).

Die Herstellung der für die erfindungsgemäßen Lösungen erforderlichen Ausgangsprodukte ist an sich bekannt aus Makromol. Chem. 178, 2589-2594 (1977), Herstellung von m-Bis-(1-phenylvinyl)-benzol. Zunächst wird m-Dibenzoyl--benzol durch Friedel-Crafts-Acylierung von Isophthalsäuredichlorid und Benzol im Molverhältnis 1 : 2 unter Verwendung von $AlCl_3$ in 1,2-Dichloräthan als Lösungsmittel hergestellt. m-Dibenzoyl-benzol wird mit Methyl-triphenyl-phosphoniumbromid im Molverhältnis 1 : 2 in einer Wittig-Reaktion unter Mitwirkung von Natriumhydrid in Dimethylsulfoxid als Lösungsmittel in m-Bis-(1-phenylvinyl)-benzol übergeführt. Die näheren Einzelheiten finden sich in der vorstehend zitierten Literaturstelle. Für die Beispiele gemäß vorliegender Erfindung wurde ein m-Bis-(1-phenylvinyl)--benzol folgender Eigenschaften verwendet: Siedepunkt 163°C bei 0,01 Torr, Schmelzpunkt 46°C (Kristallisation aus Methanol/Aceton im Verhältnis 2 : 1). Die spektroskopische Untersuchung ergibt im Infrarot eine CH-out-of-

-plane-Schwingung der Vinylidengruppe bei 900 $cm^{-1}$ und im Kernresonanzspektrum ein Signal der Vinyliden-Protonen bei 5,47 ppm (=$\delta$).

Die Herstellung von Bis-(1-phenylvinyl)-Verbindungen der Struktur

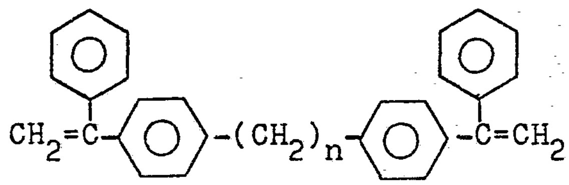

erfolgt nach dem folgenden, an sich bekannten Verfahrensschema: In einer Wurz-Fittig-Reaktion werden $\alpha,\omega$-Dibromalkane (n gleich und größer als 1) mit Brombenzol zu $\alpha,\omega$-Diphenylalkanen umgesetzt. Die genannten $\alpha,\omega$-Diphenylalkane werden mit Acetylchlorid in Gegenwart von Aluminiumchlorid in die Diacetylverbindungen übergeführt. Die Diacetylverbindungen der $\alpha,\omega$-Diphenylalkane werden dann in einer Grignard-Reaktion mit Phenylmagnesiumbromid und unter Verwendung einer geringen Menge an Brom umgesetzt. Nach Hydrolyse werden die dabei entstandenen Carbinole zu den gewünschten Bis-(1-phenylvinyl)-Verbindungen mittels Vakuumdestillation dehydratisiert. Für n = 1, wurde ein Produkt mit folgenden Eigenschaften erhalten: Siedepunkt 260°C bei 0,1 Torr, Schmelzpunkt 103°C, Spektren ähnlich wie beim m-Bis-(1-phenylvinyl)-benzol, jedoch Methylen-Protonen im NMR bei $\delta$= 3,95 ppm. Die Herstellung der erfindungsgemäßen Lösung erfolgt nach der im Beispiel 1 gegebenen Lehre.

Der Nachweis, daß die erfindungsgemäßen Lösungen bifunktionellen Organolithiumverbindungen der beanspruchten Formel zugrundeliegen, erfolgt durch spektroskopische und gaschromatographische Untersuchungen an protonierten Lösungen. Im IR finden sich keine Doppelbindungen mehr; pro

Molekül sind zwei Butylreste im Kernresonanzspektrum nachzuweisen; einseitig butylierte Produkte sowie die Ausgangsprodukte finden sich im Gaschromatogramm nicht mehr. Nach der Umsetzung des erfindungsgemäßen Lösungen mit Alkylhalogeniden sind keine Signale der Methin-Protonen im Kernresonanzspektrum festzustellen; bei zweifacher Alkylierung ist eine entsprechende Verstärkung der Signale von Methyl- und Methylenprotonen im Kernresonanzspektrum festzustellen.

Die Umsetzung der erfindungsgemäßen Lösungen mit Kohlendioxid und nachfolgende Protonierung ergibt sowohl durch Titration als auch bei Untersuchungen des Kernresonanzspektrums zwei Säuregruppen COOH bzw. zwei Carboxylprotonen.

Zur Erklärung der Wirksamkeit der erfindungsgemäßen Lösungen wird angenommen, daß zwischen den Ladungszentren der Bilithiumverbindung keine Konjugation erfolgen kann. Die Haltbarkeit des Initiators bzw. der erfindungsgemäßen Lösung wird auf den Stabilisierungseffekt der zwei Vinylgruppen zurückgeführt; die räumliche Anordnung der Ladungszentren ist offensichtlich eine Voraussetzung für die Löslichkeit der bifunktionellen Organolithiumverbindung in nichtpolaren organischen Kohlenwasserstoffen.

Die erfindungsgemäßen Lösungen werden allgemein für die anionische Polymerisation von aliphatischen konjugierten Dienen oder von vinylaromatischen Monomeren angewendet. Insbesondere wird jedoch die Copolymerisation aliphatischer Diene zusammen mit vinylaromatischen Monomeren, wie Styrol, zu den sog. linearen Dreiblockcopolymeren A-B-A bevorzugt. Bei Abwesenheit von Verunreinigungen bzw. Protonen abgebenden Mitteln ergeben sich sowohl bei der Herstellung von Homopolymeren aus den vorzugsweise angewendeten 1.3-Dienen, also auch für Blockcopolymere aus Dien

und einem vinylaromatischen Monomeren wie Styrol monomodale Molekulargewichtsverteilungen. Baut man in einem Blockcopolymeren A-B-A (B = Dienhomo-, A = Styrolhomoblock) die in der Mitte liegenden Polydienblöcke durch Oxidation mit Osmiumtetroxid ab, und bestimmt das Molekulargewicht der dabei erhaltenen Styrolhomopolymerisatblöcke, so ergibt sich unter Berücksichtigung von Molekulargewicht und Styrolgehalt der zugrundeliegenden Blockcopolymeren, daß pro Molekülkette dieser Copolymeren zwei Styrolblöcke enthalten sind. Auf diese Weise ist ebenfalls der Beweis erbracht, daß bei der anionischen Polymerisation die erfindungsgemäßen Lösungen wie bifunktionelle Organolithiumverbindungen reagieren.

Die Erfindung wird nachstehend anhand der Beispiele näher erläutert. Alle in den Beispielen genannten Teile und Prozente beziehen sich, wenn nichts anderes vermerkt ist, auf das Gewicht.

## Beispiel 1

Herstellung einer erfindungsgemäßen Lösung

1,412 g (entsprechend 0,005 Mol) von m-Bis-(1-phenylvinyl)-benzol wurden bei 20°C in 40 ml Toluol oder Benzol gelöst. Das Lösungsmittel war nach mehrtägigem Kochen über Kalium in einer Argon-Atmosphäre mit einer kleinen Menge sec.-Butyllithium versetzt und danach im Vakuum direkt in die Reaktionsapparatur mit der Divinylverbindung eindestilliert worden. Dann wurden 10,0 ml einer 1-molaren Lösung von sec.-Butyllithium zugegeben und die Reaktionsmischung nach gründlicher Durchmischung eine Stunde bei 20°C stehen gelassen. Die so erhaltene 0,1-molare Lösung der Dilithiumverbindung wurde bei -20°C aufbewahrt.

Beispiel 2

Verwendung der erfindungsgemäßen Lösung zur Herstellung eines Dreiblock-Copolymerisates

0,50 ml der in Beispiel 1 beschriebenen Lösung wurden verwendet bei der anionischen Polymerisation von 1,3-Butadien und Styrol als Monomere. Der Initiator wurde in 200 ml Toluol, dessen Reinigung wie in Beispiel 1 beschrieben erfolgte, vorgelegt und 5 g 1,3-Butadien, das 3 Stunden bei 0°C über einem Natrium-Spiegel getrocknet worden war, direkt in die heftig gerührte Reaktionslösung eindestilliert. Zur vollständigen Polymerisation des Diens wurde die Lösung 20 Stunden bei 50°C gerührt und dann 2 g Styrol, das durch mehrmalige Destillation über Lithium-aluminium-hydrid getrocknet worden war, zugegeben. Nach 3-stündigem Rühren bei 50°C wurde die Lösung mit einem Tropfen Methanol versetzt und langsam in 2 l heftig gerührtes Methanol eingegossen. Das ausgefallene Polymere wurde abfiltriert und im Vakuum getrocknet. Sein Molekulargewicht wurde durch Gelchromatographie zu etwa 142 000 g/Mol bestimmt. Der Styrol-Gehalt wurde NMR-spektroskopisch zu etwa 29 % ermittelt.

Nach dem Abbau des Polybutadien-Blocks durch Oxidation mit Osmiumtetroxid wurde das Molekulargewicht der übrig gebliebenen Polystyrol-Blöcke zu 20 000 g/Mol bestimmt. Daraus ergibt sich, daß die gebildeten Polymeren pro Molekül zwei Polystyrol-Endblöcke besitzen, und demnach Block-Copolymere des Typs A-B-A (A = Polystyrol, B = Polybutadien) sind. Aus ihnen hergestellte Filme zeigen das erwartete elastische Verhalten.

Do

0025942



Patentansprüche

1. Lösungen bifunktioneller Organolithiumverbindungen der Formel

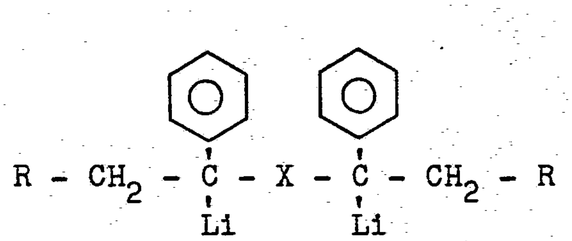

wobei X für

Reste der Formel 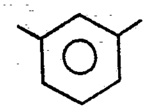

oder 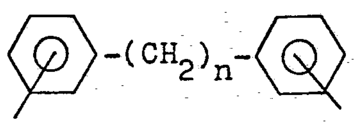 (n = 1 oder größer als 1) und

R für Alkyl steht, in wenigstens einem nichtpolaren organischen Kohlenwasserstoff als Lösungsmittel.

2. Lösungen nach Anspruch 1, dadurch gekennzeichnet, daß man aromatische Kohlenwasserstoffe als Lösungsmittel verwendet.

3. Verfahren zur Herstellung von Lösungen nach Anspruch 1, dadurch gekennzeichnet, daß man 2 Mol der lithiumorganischen Verbindung, R-Li pro Mol einer Verbindung der Formel

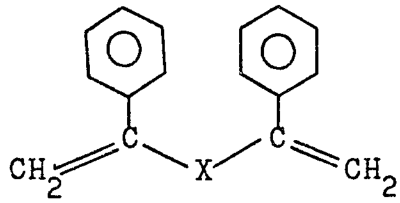

in Abwesenheit polarer Hilfsstoffe umsetzt.

4. Verwendung der Lösungen nach Anspruch 1 für die anionische Polymerisation von konjugierten aliphatischen Dienen und/oder vinylaromatischen Monomeren.

.D.